# EUROPÄISCHE PATENTANMELDUNG

(11) **EP 2 505 869 A2**
(43) Veröffentlichungstag der Anmeldung: **03.10.2012**
(21) Anmeldenummer: 12157473.5
(22) Anmeldetag: 29.02.2012
(51) Int. Cl.: F16F 9/46

(54) **Verstellbare Dämpfventileinrichtung für einen Schwingungsdämpfer**

(30) Priorität: 28.03.2011 DE 102011006204; 16.05.2011 DE 102011075909
(71) Anmelder: ZF Friedrichshafen AG, 88038 Friedrichshafen (DE)
(72) Erfinder: Beck, Hubert, 53783 Eitorf (DE)

(57) **Zusammenfassung**

Dämpfventileinrichtung (1) für einen Schwingungsdämpfer, umfassend einen Aktuator (11), der auf einen Vorstufenventilkörper(13) eines Vorstufenventils (37) wirkt, wobei der Vorstufenventilkörper (13) in einer Verspannungskette mit einem Hauptstufenventilkörper (45) eines Hauptstufenventils (47) angeordnet ist, wobei der Hubweg des Hauptstufenventilkörpers (45) proportional dem Hubweg des Vorstufenventilkörpers (13) ist und die Dämpfkraftcharakteristik der Dämpfventileinrichtung (1) von einer Ventilfederanordnung (15;49) beeinflusst wird, wobei der Vorstufenventilkörper (13) einen verstellbaren Federspanner (27) ansteuert, der die Vorspannung einer Hauptstufenventilfeder (49) als Bestanteil der Ventilfederanordnung (15;49) bestimmt.

## Beschreibung

Die Erfindung betrifft eine Dämpfventileinrichtung für einen Schwingungsdämpfer gemäß dem Oberbegriff von Patentanspruch 1.

Die DE 198 22 448 A1 betrifft eine gattungsbildende Dämpfventileinrichtung, die einen mittels eines elektrischen Aktuators betätigten Vorstufenventilkörper aufweist, der direkt auf einen Abflusskanal eines Hauptstufenventilkörpers einwirkt. Der Vorstufenventilkörper wird von einer Ventilfederanordnung in Richtung des Hauptstufenventilkörpers vorgespannt. In dem Maße, wie der Vorstufenventilkörper eine axiale Verstellbewegung ausführt, wird der Hauptstufenventilkörper nachgeführt. Deshalb wird diese Ventilbauform auch Weg-Folge-Ventil genannt. Die Kraft der Ventilfederanordnung und die hydraulische Schließkraft in einem Steuerraum wirken parallel auf den Hauptstufenventilkörper. Daraus ergeben sich konstruktive Vorgaben für die Bauform und Dimensionierung des Hauptstufenventilkörpers.

Aus der DE 196 24 897 A1 ist eine verstellbare Dämpfventileinrichtung bekannt, bei der ein Vorstufenventil den Abflussquerschnitt eines Steuerraums bestimmt. Über das Druckniveau in dem Steuerraum wird eine hydraulische Schließkraft auf einen Hauptstufenventilkörper eingestellt. In dem Steuerraum ist eine Ventilschließfeder angeordnet, deren Schließkraft der hydraulischen Schließkraft ebenfalls parallel geschaltet ist.

Die Aufgabe der vorliegenden Erfindung besteht darin, eine alternative Dämpfventileinrichtung zu realisieren, die einfach im Aufbau ist und fahrzeuggerechte Dämpfkraftkennlinien ermöglicht.

Erfindungsgemäß wird die Aufgabe dadurch gelöst, dass der Vorstufenventilkörper einen verstellbaren Federspanner ansteuert, der die Vorspannung einer Hauptstufenventilfeder als Bestanteil der Ventilfederanordnung bestimmt.

Der Vorteil dieses Bauprinzips besteht darin, dass nun ein Kraft-Weg-Folge-Ventil zur Verfügung steht. Der Betriebsweg des Vorstufenventilkörpers ist nicht unbe-1

dingt identisch mit dem Betriebsweg des Hauptstufenventilkörpers. Je nach eingestellter Vorspannung der Hauptstufenventilfeder führt der Hauptstufenventilkörper einen mehr oder weniger großen Betriebsweg aus.

In weiterer vorteilhafter Ausgestaltung der Erfindung ist der Federspanner in einem Ventilgehäuse beweglich geführt, wobei eine zur Hauptstufenventilfeder abgewandte Rückseite des Federspanners und ein Boden des Ventilgehäuses einen mit Dämpfmedium gefüllten Steuerraum bilden. Die Größe der Rückseite des Federspanners ist dabei unabhängig von der Größe der Öffnungsfläche am Hauptstufenventilkörper. Diese Unabhängigkeit der vom Dämpfmedium druckbeaufschlagten Flächen ermöglicht eine sehr große Bandbreite hinsichtlich der Anpassung des Dämpfventils an eine gewünschte Dämpfkraftkennlinie. So kann die druckbeaufschlagte Fläche am Federspanner auch größer sein als eine in Öffnungsrichtung druckbeaufschlagte Fläche am Hauptstufenventil, so dass auch besonders große Dämpfungskräfte erreicht werden können.

Dabei weist der Federspanner einen Abflusskanal ausgehend von dem Steuerraum auf, wobei der Abflussquerschnitt des Abflusskanals von dem Vorstufenventilkörper angesteuert wird. Dadurch kann die Geometrie des Hauptstufenventilkörpers im Vergleich zum genannten Stand der Technik vereinfacht werden.

Gemäß einem vorteilhaften Unteranspruch wird der Vorstufenventilkörper von einer Stellfeder als Teil der Ventilfederanordnung zwecks Wegverstellung vorgespannt. Das gesamte Vorstufenventil kann unabhängig vom Hauptstufenventil vor dem Einbau in die Dämpfventileinrichtung überprüft werden. Der Aktuator und die Stellfeder können exakt aufeinander abgestimmt werden.

Um unter allen Umständen ein unverzögertes Ansprechen des Hauptstufenventils zu verhindern ist ein vom Federspanner und dem Hauptstufenventilkörper axial begrenzter Hubraum an einen Abflussraum der Dämpfventileinrichtung angeschlossen. Der Anschluss an den Abflussraum führt zu einem Ausgleich des Dämpfmediums, das aufgrund der Betriebsbewegung des Hauptstufenventilkörpers verdrängt wird.

Im Hinblick auf eine kompakte Bauform des Hauptstufenventils ist in dem Hubraum die Hauptstufenventilfeder angeordnet.

Dabei ist vorteilhafterweise vorgesehen, dass die Hauptstufenventilfeder von mindestens einer Scheibenfeder gebildet wird.

Gemäß einem Unteranspruch weist der Federspanner einen Führungsabschnitt für den kreisringförmig ausgeführten Hauptstufenventilkörper auf. Auch bei einer vergleichsweise kurzen Führungslänge kann der Hauptstufenventilkörper keine Kippbewegung ausführen.

Eine besonders kurz und einfach bauende Dämpfventileinrichtung zeichnet sich dadurch aus, dass die mindestens eine Scheibenfeder zwischen dem Federspanner und der Hauptstufenventilsitzfläche verspannt ist und damit den Hauptstufenventilkörper bildet.

Bei einer Weiterentwicklung dieser Bauform weist das Hauptstufenventil eine erste und eine zweite Hauptstufenventilsitzfläche auf, wobei die mindestens eine Scheibenfeder auf einer Hauptstufenventilsitzfläche anliegt und der Federspanner auf der anderen Hauptstufenventilsitzfläche aufliegt, wobei die zweite Hauptstufenventilsitzfläche von einer Ventilsitzhülse gebildet wird, an der sich die mindestens eine Scheibenfeder abstützt. Diese Bauform hebt die Größenabhängigkeit zwischen der Scheibenfeder und der Ventilsitzfläche auf. Je nach der radialen Ausdehnung der Ventilsitzhülse kann eine schmalere oder breitere Scheibenfeder bei z. B. identischem Ventilsitzdurchmesser eingesetzt werden.

Man kann auch vorsehen, dass mindestens zwei Scheibenfedern in einer Reihenanordnung verwendet werden, wobei einer Scheibenfeder mindestens eine Bypassöffnung parallel geschaltet ist. Es wird eine strömungsrichtungsabhängige Öffnungskraft der mindestens zwei Scheibenfedern erreicht. Die Bypassöffnung kann in der Scheibenfeder oder in dem die Scheibenfeder abstützenden Bauteil ausgeführt sein.

Anhand der folgenden Figurenbeschreibung soll die Erfindung näher erläutert werden.

Es zeigt:
Fig. 1 u. 2 Dämpfventileinrichtung in verschiedenen Positionen eines Vorstufenventils
Fig. 3 u. 4 Dämpfventileinrichtung mit mindestens einer Scheibenfeder als Hauptstufenventilkörper

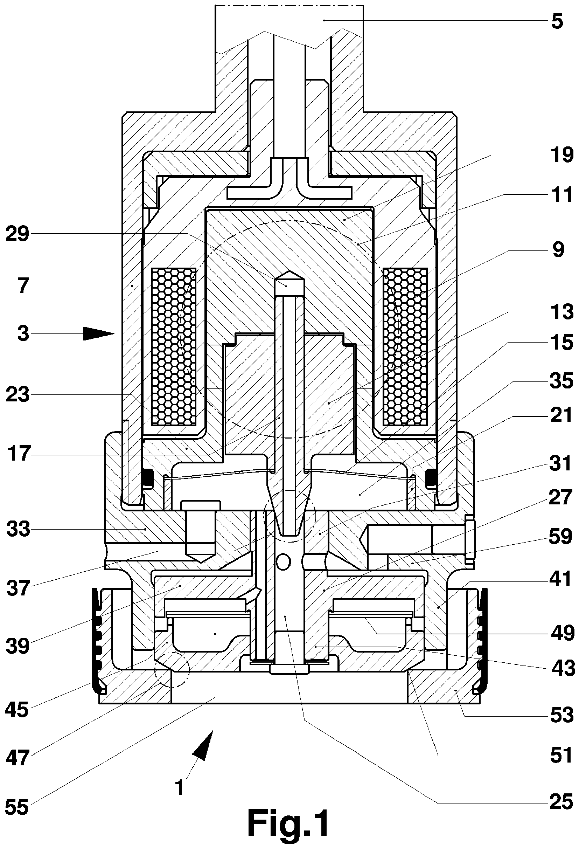

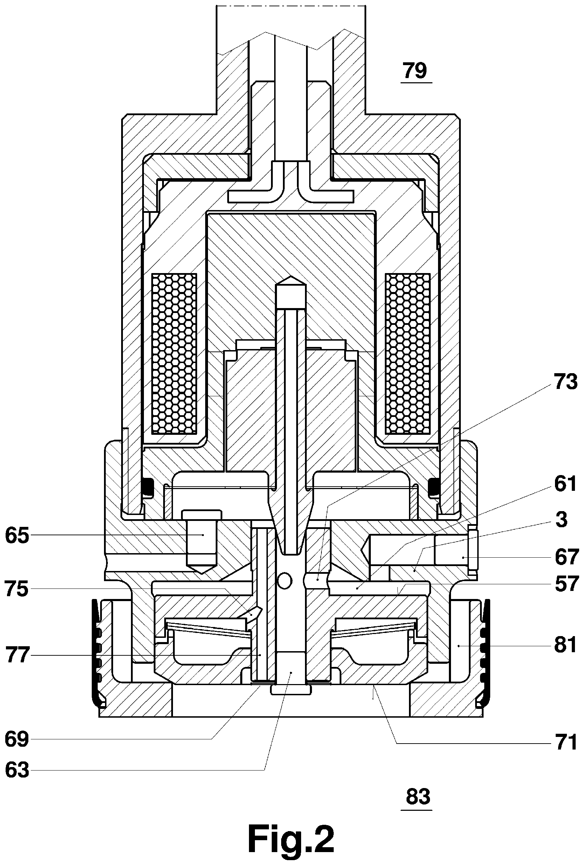

Die Figuren 1 und 2 zeigen eine erste Ausführungsform einer Dämpfventileinrichtung 1, die in einem Ventilgehäuse 3 an einer Kolbenstange 5 eines nur ausschnittweise dargestellten Schwingungsdämpfers befestigt ist. Grundsätzlich ist die Erfindung jedoch nicht auf diese Anordnung im Schwingungsdämpfer beschränkt. In einem hülsenförmigen Ventilgehäuseteil 7 ist eine Spule 9 als Teil eines Aktuators angeordnet. Grundsätzlich kann der Aktuator beliebig ausgeführt sein, d. h. elektrisch, pneumatisch hydraulisch oder auch mechanisch. Die Spule 9 übt eine Magnetkraft auf einen Vorstufenventilkörper 13 aus, der von einer scheibenförmigen Stellfeder 15 beaufschlagt ist. Der Vorstufenventilkörper 13 verfügt über einen rohrförmigen Achskörper 17, der mit einem ersten Ende in einem scheibenförmigen Rückschlusskörper 19 gelagert ist. Ein Klemmring 21 fixiert die Stellfeder 15 an einer Trennwand 23 des Ventilgehäuses. Die Trennwand 23 ist wiederum innerhalb des Ventilgehäuses 3 geklemmt.

Mit dem anderen Ende ist der Vorstufenventilkörper 13 über seinen rohrförmigen Achskörper 17 in einem Abflusskanal 25 eines Federspanners 27 gelagert. Der Abflusskanal 25 weist denselben Querschnitt auf, wie eine Sacklochbohrung 29 im Rückschlusskörper 19. Der Federspanner 27 umfasst einen zapfenförmigen Führungsabschnitt 31, der in einem Zwischengehäuseabschnitt 33 geführt ist. Der Zwischengehäuseabschnitt 33 bildet mit der Trennwand 23 einen Abflussraum 35 eines Vorstufenventils 37. Dem Führungsabschnitt 31 schließt sich ein Flanschbereich 39 an, der in einer Ringwandung 41 des Zwischengehäuseabschnitts 33 axial beweglich geführt ist. Auf einem zweiten Führungsabschnitt 43 des Federspanners 27 ist ein kreisringförmig ausgeführter Hauptstufenventilkörper 45 eines Hauptstufenventils 47 axial verschieblich gelagert. Der Hauptstufenventilkörper 45 wird von einer Hauptstufenventilfeder 49 in der Bauform mindestens einer Scheibenfeder auf eine Hauptstufenventilsitzfläche 51 vorgespannt. Dargestellt ist eine Scheibenfeder, jedoch sind grundsätzlich auch andere Bauformen verwendbar. Die Hauptstufenventilsitzfläche 51 ist wiederum an einem Ventilsitzring 53 ausgeführt, der am Ventilgehäuse 3 fixiert ist.

Der Hauptstufenventilkörper 45 und der Flanschbereich 39 des Federspanners 27 begrenzen einen Hubraum 55, in dem die Hauptstufenventilfeder 49 angeordnet ist. Dieser Hubraum 55 ist an den Abflussraum 35 des Vorstufenventils 37 angeschlossen.

Eine zur Hauptstufenventilfeder 49 abgewandte Rückseite 57 des Federspanners 27 am Flanschbereich 39 und ein Boden 59 des Ventilgehäuses 3 bilden einen mit Dämpfmedium gefüllten Steuerraum 61. Der Steuerraum 61 ist über den Abflusskanal 25 an den Abflussraum 35 angeschlossen, wobei der Abflussquerschnitt des Abflusskanals 25 von dem Vorstufenventilkörper 13 angesteuert wird.

Eine Rückschlagventilanordnung 63; 65; 67; 69 sorgt unabhängig von der Anströmrichtung des Hauptstufenventilkörpers 45 für eine Gleichrichtung eines Vorsteuerdämpfmediumstroms in den Steuerraum 61 und damit in den Abflusskanal 25. Bei einer Anströmung des Hauptstufenventilkörpers 45 über eine Stirnseite 71 des Hauptstufenventilkörpers 45 sind die Rückschlagventile 63; 65 in Durchlassrichtung geöffnet und die Rückschlagventile 67; 69 geschlossen. Das Dämpfmedium fließt in den Abflusskanal 25 in Richtung des Vorstufenventils 33. Über mindestens eine Radialöffnung im Federspanner 27 strömt Dämpfmedium in den Steuerraum 61 und beaufschlagt die Rückseite 57 des Federspanners 27. Ein Abfließen aus dem Steuerraum wird über das geschlossene Rückschlagventil 67 verhindert. Über den rohrförmigen Achskörper 17 gelangt Dämpfmedium in die Sacklochbohrung 29 des Scheibenkörpers 19. Dadurch ist der Vorstufenventilkörper hydraulisch ausgeglichen belastet. Die auf den Federspanner 27 wirkende Kraft resultiert aus der Grundvorspannung der Stellfeder 15 und der entgegengesetzt gerichteten Magnetkraft des Aktuators 11. Am Vorstufenventil 37 stellt sich ein Abflussquerschnitt ein, der proportional einem Drosselquerschnitt des geöffneten Rückschlagventils 63 in Richtung des Abflusskanals 25 ist. Dadurch folgt der Federspanner 27 stets der jeweiligen Positionsvorgabe des Aktuators bzw. des Vorstufenventilkörpers 13. In folge dessen wird die Vorspannung der Hauptstufenventilfeder verändert. In der Fig. 1 liegt eine maximale Bestromung der Spule 9 vor, die Stellfeder 15 ist deshalb maximal geschirmt. Folglich ist die Hauptstufenventilfeder 49 nur gering vorgespannt. Tendenziell führt dann die Anströmung des Hauptstufenventils 45 zu einer geringen Dämpfkraft. Die Figur 2 zeigt, wie sich durch eine stärkere Änderung der resultierenden Betätigungskraft des Aktuators durch die schwächere Bestromung die Position des Vorstufenventilkörpers 13 in Richtung des Federspanners 27 verschiebt. Der Federspanner 27 bewegt sich in Richtung des Hauptstufenventilkörpers 45 und spannt dadurch die Hauptstufenventilfeder 49 stärker vor. Tendenziell ist bei stärker vorgespannter Hauptstufenventilfeder 49 eine größere Kraft notwendig, um den Hauptstufenventilkörper 45 von der Ventilsitzfläche 51 abheben zu lassen. Es liegt eine härtere Dämpfkrafteinstellung vor. Bei einer Verstellbewegung des Vorstufenventilkörpers 13 oder einer Abhubbewegung des Hauptstufenventilkörpers 45 findet eine axiale Relativbewegung zwischen dem Hauptstufenventilkörper 45 und dem Federspanner 27 im Bereich des zweiten Führungsabschnitts 43 statt. Bei jeder Relativbewegung kann der Hubraum 55 über eine Anschlussöffnung 75 und einen Verbindungskanal 77, an dem auch das Rückschlagventil 69 angeschlossen ist, Dämpfmedium an den Abflussraum 35 abführen oder von dort aufnehmen.

Wird der Hauptstufenventilkörper 45 z. B. von einem kolbenstangenseitigen mit Dämpfmedium gefüllten Arbeitsraum 79 radial über den Ventilsitzring 53 und Radialkanäle 81 angeströmt, dann sind die Rückschlagventile 67; 69 geöffnet und die Rückschlagventile 63; 65 geschlossen. Wiederum kann Dämpfmedium in den Steuerraum 61 einfließen und in den Abflusskanal 25 weiterströmen. Je nach resultierender Betätigungskraft des Aktuators bzw. Bestromung der Spule 9 und dem daraus resultierenden Druckniveau im Steuerraum 61, verschiebt sich der Federspanner 27 und spannt die Hauptstufenventilfeder 49 mehr oder weniger stark vor. Das aus dem Abflusskanal 25 in den Abflussraum 35 strömende Dämpfmedium kann über den Verbindungskanal 77 und das geöffnete Rückschlagventil 69 aus der Dämpfventileinrichtung 1 abfließen, in diesem Fall in einen kolbenstangenfernen Arbeitsraum 83.

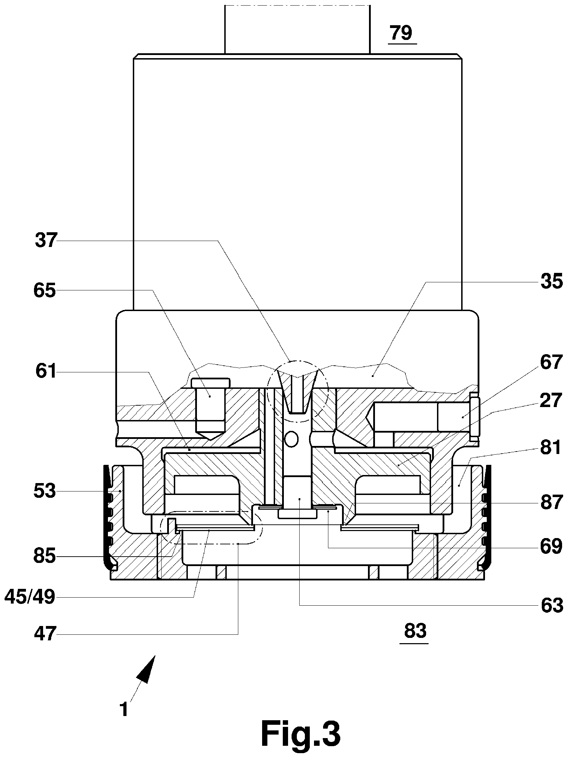

Die Variante nach Fig. 3 ist im Zusammenhang mit dem gesamten Vorstufenventil 37 und der Ausgestaltung der Rückschlagventilanordnung 63; 65; 67; 69 identisch zu der Ausführung nach den Fig. 1 bis 3. Abweichend bildet die Hauptstufenventilfeder 49, die ebenfalls als Scheibenfeder ausgeführt ist, auch den Hauptstufenventilkörper 45. Das Hauptstufenventil 47 weist eine erste Hauptstufenventilsitzfläche 85 am Ventilsitzring 53 und eine zweite Hauptstufenventilsitzfläche 87 am Federspanner 27 auf. Die mindestens eine Scheibenfeder 49 ist zwischen diesen beiden Ventilsitzflächen 85; 87 verspannt. Bei einer Anströmung aus dem kolbenstangenfernen Arbeitsraum 83 kann die Scheibenfeder 49 am äußeren Umfang von der Ventilsitzfläche 85 des Ventilsitzrings 53 und bei einer Anströmung über die mindestens eine Radialöffnung 81 am Innendurchmesser bzw. an der Ventilsitzfläche 87 abheben.

Bei gleichem Volumenstrom und Einstellung des Aktuators 11 liegt bei einer Anströmung über die Radialöffnung 81 eine größere Dämpfkraft an, der der Durchflussquernitt am Innendurchmesser der Scheibenfeder kleiner ist als am Außendurchmesser.

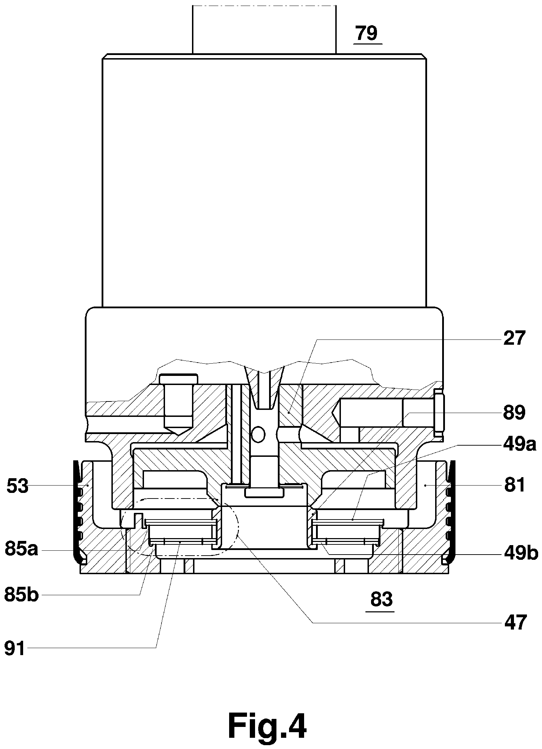

In der Ausführung nach Fig. 4 basierend auf der Dämpfventileinrichtung nach Figur 4 ist der Dämpfkraftunterschied zwischen den beiden Anströmungsrichtung nochmals gesteigert. Dazu kommen mindestens zwei Scheibenfedern 49a; 49b zur Anwendung, die sich jeweils mit ihren Außendurchmesser an jeweils einer ersten Hauptstufenventilsitzfläche 85a; 85b des Ventilsitzrings 53abstützen. Mit ihren Innendurchmessern sind die beiden Scheibenfedern 49a; 49b auf einer Ventilsitzhülse 89 vorgespannt. Eine Stirnfläche der Ventilsitzhülse 89 bildet eine zweite Hauptstufenventilsitzfläche 87, auf der der Federspanner 27 aufliegt.

Bei einer Anströmung ausgehend vom kolbenstangenfernen Arbeitsraum 87 kann das Dämpfmedium über mindestens eine Bypassöffnung 91 in der Scheibenfeder 49b, die damit funktional der Scheibenfeder 49b parallel geschaltet ist, zur zweiten Scheibenfeder 49a strömen, ohne dass dabei die erste Scheibenfeder 49b von ihrer Ventilsitzfläche 85b abhebt. In Verbindung mit dem relativ großen Durchtrittsquerschnitt am Außendurchmesser der Scheibenfeder 49a kann ein großer Dämpfmediumvolumenstrom das Hauptstufenventil 47 durchströmen.

Wird das Dämpfmedium hingegen über die mindestens eine Radialöffnung 81 zugeführt, dann muss eine Öffnungskraft vorliegen, die größer ist als die Schließkräfte beider Scheibenfedern 49a; 49b, die nun gemeinsam wirken. Bei einer Öffnungsbewegung hebt die Ventilsitzhülse 89 von dem Federspanner 27 ab, so dass das Dämpfmedium in den kolbenstangenfernen Arbeitsraum 83 fließen kann.

Bezugszeichen
- 1: Dämpfventileinrichtung
- 3: Ventilgehäuse
- 5: Kolbenstange
- 7: Ventilgehäuseteil
- 9: Spule
- 11: Aktuator
- 13: Vorstufenventilkörper
- 15: Stellfeder
- 17: Achskörper
- 19: Rückschlusskörper
- 21: Klemmring
- 23: Trennwand
- 25: Abflusskanal
- 27: Federspanner
- 29: Sacklochbohrung
- 31: Führungsabschnitt
- 33: Zwischengehäuseabschnitt
- 35: Abflussraum
- 37: Vorstufenventile
- 39: Flanschbereich
- 41: Ringwandung
- 43: Führungszapfen
- 45: Hauptstufenventilkörper
- 47: Haustufenventile
- 49: Hauptstufenventilkörper
- 51: Hauptstufenventilsitzfläche
- 53: Ventilsitzring
- 55: Hubraum
- 57: Rückseite
- 59: Boden
- 61: Steuerraum
- 63: Rückschlagventil
- 65: Rückschlagventil
- 67: Rückschlagventil
- 69: Rückschlagventil
- 71: Stirnseite
- 73: Radialöffnung
- 75: Anschlussöffnung
- 77: Verbindungskanal
- 79: Arbeitsraum, kolbenstangenseitig
- 81: Radialkanäle
- 83: Arbeitsraum, kolbenstangenfern
- 85: erste Hauptstufenventilsitzfläche
- 87: zweite Hauptstufenventilsitzfläche
- 89: Ventilsitzhülse
- 91: Bypassöffnung

## Patentansprüche

1. Dämpfventileinrichtung (1) für einen Schwingungsdämpfer, umfassend einen Aktuator (11), der auf einen Vorstufenventilkörper (13) eines Vorstufenventils (37) wirkt, wobei der Vorstufenventilkörper (13) in einer Verspannungskette mit einem Hauptstufenventilkörper (45) eines Hauptstufenventils (47) angeordnet ist, wobei der Hubweg des Hauptstufenventilkörpers (45) proportional dem Hubweg des Vorstufenventilkörpers (13) ist und die Dämpfkraftcharakteristik der Dämpfventileinrichtung (1) von einer Ventilfederanordnung (15; 49) beeinflusst wird, **dadurch gekennzeichnet, dass** der Vorstufenventilkörper (13) einen verstellbaren Federspanner (27) ansteuert, der die Vorspannung einer Hauptstufenventilfeder (49) als Bestanteil der Ventilfederanordnung (15; 49) bestimmt.

2. Dämpfventileinrichtung nach Anspruch 1, **dadurch gekennzeichnet, dass** der Federspanner (27) in einem Ventilgehäuse (3) beweglich geführt ist, wobei eine zur Hauptstufenventilfeder (49) abgewandte Rückseite (57) des Federspanners (27) und ein Boden (59) des Ventilgehäuses (3) einen mit Dämpfmedium gefüllten Steuerraum (61) bilden.

3. Dämpfventileinrichtung nach Anspruch 2, **dadurch gekennzeichnet, dass** der Federspanner (27) einen Abflusskanal (25) ausgehend von dem Steuerraum (61) aufweist, wobei der Abflussquerschnitt des Abflusskanals (25) von dem Vorstufenventilkörper (13) angesteuert wird.

4. Dämpfventileinrichtung nach Anspruch 1, **dadurch gekennzeichnet, dass** der Vorstufenventilkörper (13) von einer Stellfeder (15) als Teil der Ventilfederanordnung (15; 49) vorgespannt wird.

5. Dämpfventileinrichtung nach Anspruch 1, **dadurch gekennzeichnet, dass** ein vom Federspanner (27) und dem Hauptstufenventilkörper (45) axial begrenzter Hubraum (55) an einen Abflussraum (35) der Dämpfventileinrichtung (1) angeschlossen ist.

6. Dämpfventileinrichtung nach Anspruch 5, **dadurch gekennzeichnet, dass** in dem Hubraum (55) die Hauptstufenventilfeder (49) angeordnet ist.

7. Dämpfventileinrichtung nach einem der Ansprüche 1 bis 6, **dadurch gekennzeichnet, dass** die Hauptstufenventilfeder (49) von mindestens einer Scheibenfeder gebildet wird.

8. Dämpfventileinrichtung nach Anspruch, **dadurch gekennzeichnet, dass** der Federspanner (27) einen Führungsabschnitt (43) für den kreisringförmig ausgeführten Hauptstufenventilkörper (45) aufweist.

9. Dämpfventileinrichtung nach Anspruch 7, **dadurch gekennzeichnet, dass** die mindestens eine Scheibenfeder (49) zwischen dem Federspanner (27) und einer Hauptstufenventilsitzfläche (51; 85a; 85b) verspannt ist und damit den Hauptstufenventilkörper (49) bildet.

10. Dämpfventileinrichtung nach Anspruch 9, **dadurch gekennzeichnet, dass** das Hauptstufenventil (49) eine erste und eine zweite Hauptstufenventilsitzfläche (85a; 85b) aufweist, wobei die mindestens eine Scheibenfeder (49) auf einer Hauptstufenventilsitzfläche (85; 85a; 85b) anliegt und der Federspanner (27) auf einer zweiten Hauptstufenventilsitzfläche (87) aufliegt, wobei die zweite Hauptstufenventilsitzfläche (87) von einer Ventilsitzhülse (89) gebildet wird, an der sich die mindestens eine Scheibenfeder (49) abstützt.

11. Dämpfventileinrichtung nach Anspruch, **dadurch gekennzeichnet, dass** mindestens zwei Scheibenfedern (49a; 49b) in einer Reihenanordnung verwendet werden, wobei einer Scheibenfeder (49b) mindestens eine Bypassöffnung (91) parallel geschaltet ist.
